# EUROPÄISCHE PATENTSCHRIFT

(11) **EP 3 030 114 B1**
(45) Veröffentlichungstag und Bekanntmachung des Hinweises auf die Patenterteilung: **11.09.2019**
(21) Anmeldenummer: 14744349.3
(22) Anmeldetag: 29.07.2014
(51) Int. Cl.: A47J 19/02

(54) **NACHLAUFSPERRVORRICHTUNG FÜR EIN KÜCHENGERÄT**
AFTER-RUN BLOCKING DEVICE FOR A KITCHEN APPLIANCE
DISPOSITIF DE BLOCAGE DE LA MARCHE PAR INERTIE POUR UN USTENSILE DE CUISINE

(30) Priorität: 08.08.2013 DE 102013215625
(43) Veröffentlichungstag der Anmeldung: 15.06.2016
(73) Patentinhaber: BSH Hausgeräte GmbH, 81739 München (DE)
(72) Erfinder: KRÜGER, Tobias, 81541 München (DE)
(86) Internationale Anmeldenummer: PCT/EP2014/066221
(87) Internationale Veröffentlichungsnummer: WO 2015/018687

(56) Entgegenhaltungen:
- DE-A1- 2 806 096
- DE-A1- 3 149 072
- DE-A1- 19 513 224
- US-A1- 2011 083 565

## Beschreibung

### Gebiet der Erfindung

Die vorliegende Erfindung betrifft eine Nachlaufsperrvorrichtung für ein Küchengerät, wobei das Küchengerät einen Sammelbehälter und einen Auslauf aufweist.

### Hintergrund der Erfindung

Küchengeräte mit einem Sammelbehälter und einem Auslauf sind aus dem Stand der Technik bekannt.

Beispielsweise ist aus der deutschen Patentschrift DE 31 49 072 C2 eine Küchenmaschine mit elektrisch angetriebenem, rotierendem Werkzeug bekannt. Der beim Entsaften mit dieser Küchenmaschine gewonnene Saft fließt durch eine an der Vorderseite des Gerätes angeordnete Auslauftülle in ein an das Gerät angesetztes Gefäß.

Aus der Offenlegungsschrift DE 195 13 224 A1 ist eine Küchenmaschine, insbesondere Entsafter, Gemüseraffel oder dergleichen, mit einem Elektromotor, einem aufsetzbaren Schneidwerk und mit einem das Schneidwerk umgebenden Vorsatz zur Aufnahme des zu schneidenden Gutes bekannt. Der Vorsatz weist einen Auslaufstutzen auf, aus dem der ausgepresste Saft herauslaufen kann.

Die US 2011/0083565 A1 beschreibt ein Lebensmittelverarbeitungsgerät zur Saftgewinnung, welches einen Behälter zum Aufnehmen flüssiger Komponenten enthält, der einen Auslass aufweist, wobei ein Schieber vor einer ersten Auslassöffnung, die an dem Gerätekörper angebracht ist, verschoben werden kann. Über den Schieber kann in der unteren Stellung die erste Auslassöffnung mit einer zweiten Auslassöffnung, die dem Schieber zugeordnet ist, in Deckung gebracht werden, wobei ein Durchfluss von Flüssigkeit durch den Auslass ermöglicht wird. In einer oberen Stellung des Schiebers ist die Auslassöffnung des Gerätekörpers verschlossen.

Schließlich ist aus der Offenlegungsschrift DE 28 06 096 A1 eine motorgetriebene Zitruspresse mit einem Auspresskegel bekannt. Eine Auslauftülle als Saftablauf wird üblicherweise mit einem Hahn verschlossen. Vergisst der Benutzer, den Hahn zu öffnen, so bestünde die Gefahr, dass sich der Saft im Saftsammelraum unter dem Sieb hochstaut und über den Kragen in den Motorraum gelangen könnte. Da aber der Damm niedriger liegt als dieser Kragen, bildet er einen Überlauf, und der Saft gelangt in den Abfallbehälter.

### Der Erfindung zugrundeliegende Aufgabe

Der Erfindung liegt die Aufgabe zugrunde, eine Nachlaufsperrvorrichtung für Küchengeräte, die einen Sammelbehälter und einen Auslauf aufweisen, bereitzustellen. Insbesondere soll eine Sperrvorrichtung bereitgestellt werden, die einerseits ein Nachlaufen aus dem Auslauf verhindert und andererseits einen Überlauf ermöglicht.

### Erfindungsgemäße Lösung

Die Lösung der gestellten Aufgabe gelingt durch eine Nachlaufsperrvorrichtung für ein Küchengerät, das einen Sammelbehälter, beispielsweise für gepressten Saft, und einen Auslauf, beispielsweise um den gepressten Saftes in ein Trinkglas oder in ein anderes Behältnis zu füllen, aufweist. Die Nachlaufsperrvorrichtung ist zwischen dem Sammelbehälter und dem Auslauf des Küchengeräts angeordnet und weist einen Schieber auf. Der Schieber gibt in einer ersten Position eine erste Querschnittsfläche des Auslaufs frei, so dass beispielsweise Saft aus dem Sammelbehälter durch diese erste Querschnittsfläche des Auslaufs fließen kann. In einer zweiten Position verschließt der Schieber eine zweite Querschnittsfläche des Auslaufs, so dass beispielsweise Reste von Saft, welcher sich noch in dem Sammelbehälter befinden kann, nicht durch den Auslauf nachlaufen kann, insbesondere nachdem kein Auffangbehältnis mehr unter dem Auslauf steht. Die erste und die zweite Querschnittsfläche überdecken sich zumindest in einem unteren Querschnittsbereich des Auslaufs. Mit anderen Worten, der untere Querschnittsbereich wird in der ersten Position freigegeben und in der zweiten Position verschlossen. Der untere Querschnittsbereich ist ein Querschnittsbereich des Auslaufs, der sich vom - bei vorgesehenem Gebrauch bezogen auf die Richtung der Schwerkraft - unteren Rand des Querschnitts des Auslaufs aus erstreckt. Da die Flüssigkeit den Auslauf schwerkraftbedingt im unteren Bereich durchströmt, kann dieser Strom durch Bewegen des Schiebers von der ersten in die zweite Position wenigstens teilweise, vorzugsweise vollständig, unterbunden und durch Bewegen des Schiebers von der zweiten in die erste Position wenigstens teilweise, vorzugsweise vollständig, freigegeben werden.

Die erfindungsgemäße Nachlaufsperrvorrichtung kann den Durchfluss einer Flüssigkeit zumindest teilweise sperren oder freigeben. Die Bezeichnung "Flüssigkeit" soll im Sinne der Erfindung auch fließfähige heterogene Gemische, z.B. Suspensionen, umfassen, insbesondere Medien, die neben flüssigen Bestandteilen (z.B. Fruchtsaft) auch feste (z.B. Fruchtfleisch) oder gasförmige Bestandteile (z.B. Kohlensäure) enthalten. Die Bezeichnung "Saft" soll im Sinne der Erfindung auch safthaltige Flüssigkeiten umfassen, z. B. Gemische aus Fruchtsaft und Fruchtfleisch. Der Saft ist vorzugsweise eine Fruchtsaft oder ein Gemüsesaft.

Das Küchengerät kann beispielsweise zum Auspressen von Obst, Früchten oder Gemüse genutzt werden. Das Küchengerät kann hierzu mit elektrischer Energie betrieben werden, wobei sowohl netzbetriebene als auch Batterie- oder Akkugeräte eingeschlossen sind. Durch die elektrische Energie kann z.B. ein Elektromotor des Küchengeräts angetrieben werden. Das Küchengerät kann beispielsweise ein Entsafter, eine Obstpresse oder eine Universal- bzw. Multifunktions-Küchenmaschine sein.

Das Küchengerät kann modular aufgebaut sein. Ein Modul kann ein Sammelbehälter für gepressten Saft und/oder für ausgepresstes Fruchtfleisch sein. Weitere Module können ein Motorgehäuse, ein Sockelbereich, ein Deckel mit einem Einfüllstutzten für Obst, Früchte, Gemüse und ein Tresterbehälter sein. Ein Tresterbehälter kann zum Aufbewahren von Rückständen bei der Behandlung von Nahrungsmitteln vorgesehen sein. Ein Tresterbehälter kann z. B. für eine Zitruspresse zum Auffangen von gepressten Früchten genutzt werden. Die Module des Küchengeräts können auch als Gehäuseteile bezeichnet werden.

Zwischen dem Sammelbehälter und dem Auslauf des Küchengeräts ist erfindungsgemäß die Nachlaufsperrvorrichtung angeordnet. Die Nachlaufsperrvorrichtung weist einen Schieber auf, der wenigstens eine erste und eine zweite Position einnehmen kann, oder anders ausgedrückt, wenigstens in einer ersten Position oder in einer zweiten Position angeordnet sein kann. Der Schieber kann vorzugsweise manuell von der ersten in die zweite Position, oder umgekehrt, überführt werden. Dabei kann der Schieber unmittelbar manuell betätigt werden, oder mittels eines Gestänges oder eines Getriebes. Ebenso kann der Schieber durch einen Motor oder ein anderes Hilfsmittel betätigt werden.

Der Schieber kann mittels einer translatorischen Bewegung oder mittels einer Rotation von der ersten in die zweite Position, oder umgekehrt, bewegt oder überführt werden. Hierbei ist mit "Rotation" gemeint, dass der Schieber an einem Drehpunkt um diesen drehbar festgelegt ist, während bei einer translatorischen Bewegung dieser Drehpunkt fehlt. Eine translatorische Bewegung kann linear oder gekrümmt verlaufen. Beispielsweise kann der Schieber in der ersten Position eine erste Querschnittsfläche des Auslaufs freigeben, die dem vollständigen bzw. gesamten Querschnitt des Auslaufs entspricht. Die erste Querschnittsfläche, die von dem Schieber freigegeben wird, kann jedoch insbesondere kleiner als der vollständige bzw. gesamte Querschnitt des Auslaufs sein. In diesem Fall wirkt die erste Querschnittsfläche des Schiebers als Blende in dem von der Flüssigkeit durchströmten Auslauf. Der Volumenstrom, der durch den Auslauf ausströmt, kann mit dieser, gegenüber dem vollständigen Strömungsquerschnitt des Auslaufs verkleinerter erster Querschnittsfläche verringert oder begrenzt werden. Dies kann beispielsweise dann vorteilhaft sein, wenn Flüssigkeit, z.B. Saft, aus dem Sammelbehälter nur mit einem bestimmten maximalen Volumenstrom austreten soll, etwa um begrenzte Füllmengen von Gläsern oder Behältern, in die die Flüssigkeit eingefüllt wird, nicht zu überschreiten, oder einen Behälterwechsel einfacher zu ermöglichen, oder allgemein Verluste von austretender Flüssigkeit zu verringern.

Weiterhin kann der Schieber in der zweiten Position eine zweite Querschnittsfläche des Auslaufs ganz oder teilweise verschließen. Wird die Querschnittsfläche des Auslaufs vollständig verschlossen, kann keine Flüssigkeit von dem Sammelbehälter in den Auslauf fließen. Wird dagegen die Querschnittsfläche des Auslaufs nur teilweise verschlossen, so kann nur unter bestimmten Umständen Flüssigkeit in den Auslauf fließen. Wenn beispielsweise die zweite Querschnittsfläche des Schiebers nur die untere Hälfte des Auslaufs verschließt, so kann der Flüssigkeitspegel in dem Sammelbehälter zumindest soweit ansteigen (ohne in den Auslass auszufließen), bis die untere Hälfte, also die zweite Querschnittsfläche, bedeckt ist. Steigt der Flüssigkeitspegel in dem Sammelbehälter darüber hinaus weiter an, fließt Flüssigkeit in den Auslauf.

Eine zweite Querschnittsfläche, die den Auslauf nicht vollständig verschließt, kann insbesondere dann vorteilhaft sein, wenn ein zu stark ansteigender Pegel in dem Sammelbehälter bei einem vollständigen Verschluss des Auslaufs beispielsweise elektrische Teile, z. B. einen Antriebmotor in dem Küchengerät, gefährden könnte. Dies könnte bei einem nachfolgenden elektrischen Kurzschluss und einer Weiterleitung des Stroms durch die Flüssigkeit in dem Sammelbehälter zu lebensbedrohlichen Situationen von Nutzern des Küchengeräts führen.

Die erfindungsgemäße Nachlaufsperrvorrichtung kann vorteilhaft dazu genutzt werden, um eine Flüssigkeit aus dem Sammelbehälter in einer ersten Position des Schiebers durch den Auslauf ausfließen zu lassen, und anschließend, wenn beispielsweise ein Glas mit Flüssigkeit, z.B. Saft, aus dem Sammelbehälter gefüllt ist, den Schieber in die zweite Position zu verschieben, um ein Nachlaufen von austretender Flüssigkeit aus dem Sammelbehälter zu verhindern. Gleichzeitig kann vorteilhaft mit der erfindungsgemäßen Nachlaufsperrvorrichtung verhindert werden, dass der Flüssigkeitspegel in dem Sammelbehälter zu stark ansteigt und möglicherweise elektrische Komponenten in dem Küchengerät gefährdet. Dieses zu starke Ansteigen kann durch die beschriebene Überlauffunktion einer zweiten Querschnittsfläche des Schiebers, die den Auslass nicht vollständig verschließt, erreicht werden.

Erfindungsgemäß weist die Nachlaufsperrvorrichtung eine Halterung für den Schieber auf, wobei die Halterung mit dem Sammelbehälter lösbar verbunden ist. Ein Schieber mit einer Halterung, die von dem Sammelbehälter gelöst werden kann, ist vorteilhaft, um beispielsweise eine Reinigung oder eine Reparatur des Schiebers oder der Haltung zu erleichtern. Wenn das Küchengerät beispielsweise als Saftpresse ausgeführt ist, kann eine Demontage zur regelmäßigen Reinigung vorteilhaft und hygienisch sein, um Reste von Fruchtfleisch oder ähnlichem leicht entfernen zu können.

Bevorzugt weist die Halterung für den Schieber einen Schnappverschluss zum lösbaren Verbinden der Halterung mit dem Sammelbehälter auf. Mithilfe des Schnappverschlusses kann vorteilhaft auf eine einfache Art und Weise die Halterung, die mit dem Schieber verbunden ist, vom dem Sammelbehälter, insbesondere zur Reinigung nach Gebrauch des Küchengeräts, entfernt und anschließend wieder zusammengesteckt werden. Ein Schnappverschluss kann ein Kunststoffteil mit biegsamen Elementen sein, das mit einem entsprechend geformten Teil, mit dem der Schnappverschluss verbunden wird, zusammengeführt wird. Ein Schnappverschluss kann vorteilhaft einfach manuell bedient werden, um die Halterung mit dem Schieber und dem Schnappverschluss von dem Sammelbehälter abzunehmen, zu reinigen und wieder zusammenzusetzen.

### Bevorzugte Ausgestaltungen der Erfindung

Vorteilhafte Aus- und Weiterbildungen, welche einzeln oder in Kombination miteinander eingesetzt werden können, sind Gegenstand der abhängigen Ansprüche.

Bei einer erfindungsgemäß bevorzugten Nachlaufsperrvorrichtung weist der Sammelbehälter eine Rasteinrichtung zum lösbaren Fixieren des Schiebers in der ersten Position auf. Der Schieber kann vertikal von unten nach oben bewegt werden, um den Schieber von der zweiten Position in die erste Position zu bewegen bzw. zu verschieben. In der zweiten Position verschließt der Schieber die zweite Querschnittsfläche des Auslaufs, in der ersten Position gibt der Schieber die erste Querschnittsfläche des Auslaufs frei. Vorteilhafterweise wird der Schieber in der ersten Position, also in der vertikal oberen Position in diesem Ausführungsbeispiel, fixiert, ohne manuell oder auf eine andere Art und Weise gehalten werden zu müssen. Diese Fixierung wird erfindungsgemäß mittels einer Rasteinrichtung ausgeführt. Eine Rasteinrichtung kann ein Vorsprung oder ein Haken aus Kunststoff sein, der an dem Sammelbehälter befestigt ist, oder integral mit diesem einstückig verbunden ist. Der Schieber kann einen biegsamen, elastischen Steg aus Kunststoff aufweisen, der bei einem Bewegen des Schiebers in die erste Position in die Rasteinrichtung eingehakt und somit in der ersten Position fixiert wird. Aufgrund der elastischen Eigenschaften des Stegs kann der Schieber vorteilhaft einfach bei Bedarf manuell wieder in die zweite Position verschoben werden.

Besonders vorzugsweise weist der Schieber eine translatorische Führung zum Bewegen von der ersten Position in die zweite Position und umgekehrt auf. Die translatorische Führung des Schiebers kann dazu vorgesehen sein, um den Schieber in der Halterung zu bewegen bzw. zu verschieben. Alternativ kann die translatorische Führung des Schiebers ausgestaltet sein, um direkt an dem Sammelbehälter bewegt bzw. verschoben zu werden.

Die Erfindung weiterbildend ist vorzugsweise vorgesehen, dass die zweite Querschnittsfläche den Auslauf zwischen 50% und 90%, insbesondere zwischen 60% und 80%, der Auslauföffnung verschließt. Ein Verschluss von beispielsweise 80% bedeutet, dass noch 20% der Auslaufquerschnittsfläche frei bzw. für ein Hindurchtreten oder eine Strömung von Flüssigkeit durchgängig ist, wenn der Schieber in der zweiten Position angeordnet ist. Weiterhin bedeutet ein Verschluss von 80%, dass ein Nachlaufen von Flüssigkeit aus dem Sammelbehälter solange verhindert wird, bis die Flüssigkeit oder der Pegel in dem Sammelbehälter soweit gestiegen ist, dass 80% der Auslaufquerschnittsfläche bedeckt sind. Ein weiteres Ansteigen der Flüssigkeit in dem Sammelbehälter, beispielsweise durch ein weiteres Auspressen von Früchten in dem Küchengerät oder durch ein Nachlaufen von bereits ausgepressten Früchten, bedeutet, dass die Flüssigkeit durch die 20% der Auslaufquerschnittsfläche hindurchtreten und somit eine Überlauffunktion erfüllen kann.

In einer bevorzugten Ausführung der Erfindung gibt die erste Querschnittsfläche den Auslauf zwischen 50% und 90%, insbesondere zwischen 60% und 80%, der Auslauföffnung frei. Wenn die erste Querschnittsfläche den Auslauf um 50% der Auslauföffnung freigibt, bedeutet dies, dass nur die Hälfte der Auslaufquerschnittsfläche für ein Auslaufen der Flüssigkeit, beispielsweise Saft, aus dem Sammelbehälter zur Verfügung steht. Dies kann vorteilhaft sein, wenn beispielsweise kleine Behälter oder Gläser befüllt werden sollen, und nach jedem Befüllen der Schieber zunächst wieder geschlossen, das heißt in die zweite Position verschoben, wird. Entsprechend kann bei einer Freigabe der ersten Querschnittsfläche von 90% wesentlich mehr durch die Austrittsöffnung hindurchtreten.

In einer weiteren bevorzugten Ausführungsform weist der Sammelbehälter eine Dichtung zum Abdichten des Schiebers gegen den Sammelbehälter auf. Eine Dichtung kann eine ringförmige Gummilippendichtung sein, die in einer Nut in dem Sammelbehälter angeordnet ist. Mittels der Dichtung kann vorteilhaft erreicht werden, dass Flüssigkeit aus dem Sammelbehälter nur durch die Auslauföffnung austritt. Gleichzeitig ist bei der Anordnung der Dichtung, der Materialauswahl der Dichtung als auch gegebenenfalls bei den Gleiteigenschaften der Dichtung darauf zu achten, dass trotz einer Bewegung des Schiebers die Dichtfunktion erhalten bleibt. Weiterhin ist darauf zu achten, dass bei Früchten oder anderen Lebensmitteln, die in den Sammelbehälter gelangen, das Dichtungsmaterial auf Lebensmittelverträglichkeit geprüft wird.

Die Erfindung weiterbildend ist vorzugsweise vorgesehen, dass der Schieber und/oder die Halterung und/oder der Schnappverschluss einen Kunststoff, insbesondere ABS (Abkürzung für: Acrylnitril-Butadien-Styrol), aufweist, oder aus Kunststoff hergestellt ist. Kunststoff kann vorteilhaft sein, da er einfach zu verarbeiten ist, damit unterschiedliche Geometrien, beispielsweise mittels Spritzgusstechnik, herstellbar sind und viele Kunststoffe auf Lebensmittelverträglichkeit hin geprüft sind.

Erfindungsgemäß ist vorzugsweise vorgesehen, dass der Auslauf ein Metall aufweist, oder aus Metall hergestellt ist. Ein Metall kann beispielsweise ein Edelstahl sein. Aufgrund ihrer lebensmittelverträglichen Eigenschaften sind viele Metalle vorteilhaft für Anwendungen in Küchengeräten geeignet.

Der Auslauf kann lösbar oder nicht lösbar in die erfindungsgemäße Nachlaufsperrvorrichtung integriert sein. Der Auslauf kann beispielsweise in die Nachlaufsperrvorrichtung eingeklebt oder eingesteckt sein.

### Kurzbeschreibung der Zeichnungen

Weitere vorteilhafte Ausgestaltungen werden nachfolgend an Hand eines in den Zeichnungen dargestellten Ausführungsbeispiels, auf welches die Erfindung jedoch nicht beschränkt ist, näher beschrieben.

Es zeigt schematisch:
- Fig. 1: eine erfindungsgemäße Nachlaufsperrvorrichtung mit einem Sammelbehälter und einem Auslauf in einer perspektivischen Darstellung;
- Fig. 2A, 2B und 2C: einen erfindungsgemäßen Schieber in einer Vorderansicht, in einer Schnittdarstellung und in einer perspektivischen Darstellung;
- Fig. 3: eine erfindungsgemäße Halterung in einer perspektivischen Darstellung;
- Fig. 4: einen erfindungsgemäßen Schnappverschluss in einer perspektivischen Darstellung;
- Fig. 5A und 5B: eine erfindungsgemäße Nachlaufsperrvorrichtung mit einem Schieber in einer ersten und in einer zweiten Position in einer perspektivischen Halbschnitt-Darstellung; und
- Fig. 6A und 6B: eine erfindungsgemäße Nachlaufsperrvorrichtung mit und ohne Sammelbehälter in einer perspektivischen Darstellung.

### Ausführliche Beschreibung der Erfindung anhand von einem Ausführungsbeispiel

Bei der nachfolgenden Beschreibung einer bevorzugten Ausführungsform der vorliegenden Erfindung bezeichnen gleiche Bezugszeichen gleiche oder vergleichbare Komponenten.

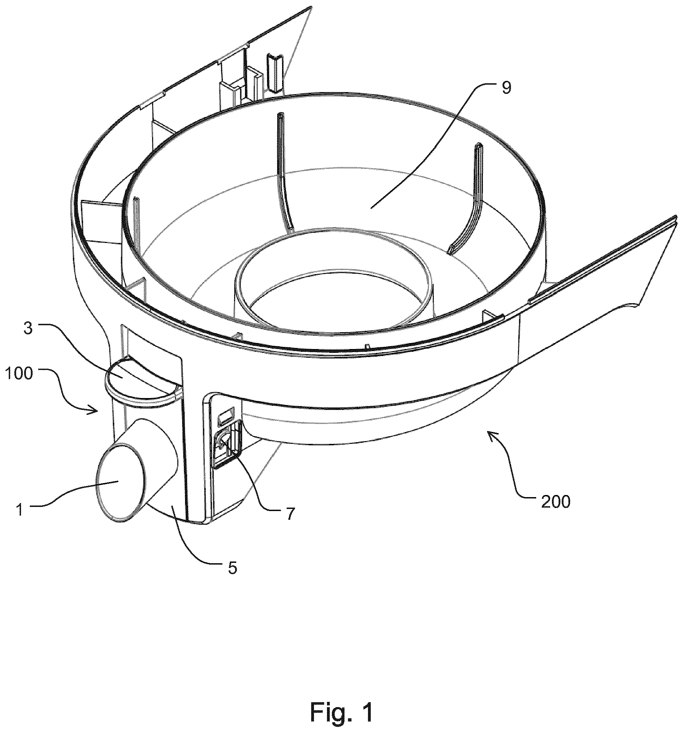

Fig. 1 zeigt in einer perspektivischen Darstellung eine erfindungsgemäße Nachlaufsperrvorrichtung 100, die zwischen einem Sammelbehälter 200 und einem Auslauf 1 angeordnet ist. Der Sammelbehälter 200 ist zum Verbinden mit einem Küchengerät, beispielsweise einem Entsafter, vorgesehen. Das Küchengerät kann ebenso ein Multifunktionsgerät oder ein anderes Küchengerät sein.

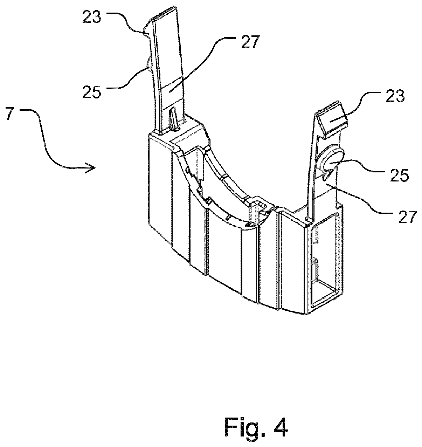

Die Nachlaufsperrvorrichtung 100 weist einen Schieber 3, eine Halterung 5 und einen Schnappverschluss 7 (verdeckt) auf. Von dem Schnappverschluss 7 ist in Fig. 1 nur ein Ende eines Stegs mit einem Einrastkeil zu sehen, der mit dem Sammelbehälter 200 lösbar verbunden ist. Der Schnappverschluss 7 wird in Fig. 4 als Einzelteildarstellung gezeigt.

In dem Sammelbehälter 200 ist ein torusförmiger Innenraum 9 zu sehen, in dem beispielsweise Saft von einem weiteren Gehäuseteil (neben dem Sammelbehälter 200 als ein Gehäuseteil) des Küchengeräts zugeführt wird oder zufließt. Aus diesem Innenraum 9 fließt, je nach der Position des Schiebers 3 und abhängig vom Füllstand im Innenraum 9, Saft durch den Auslauf 1, beispielsweise in ein Auffangbehälter (z. B. Glas oder Becher), der unterhalb des Auslaufs 1 angeordnet werden kann.

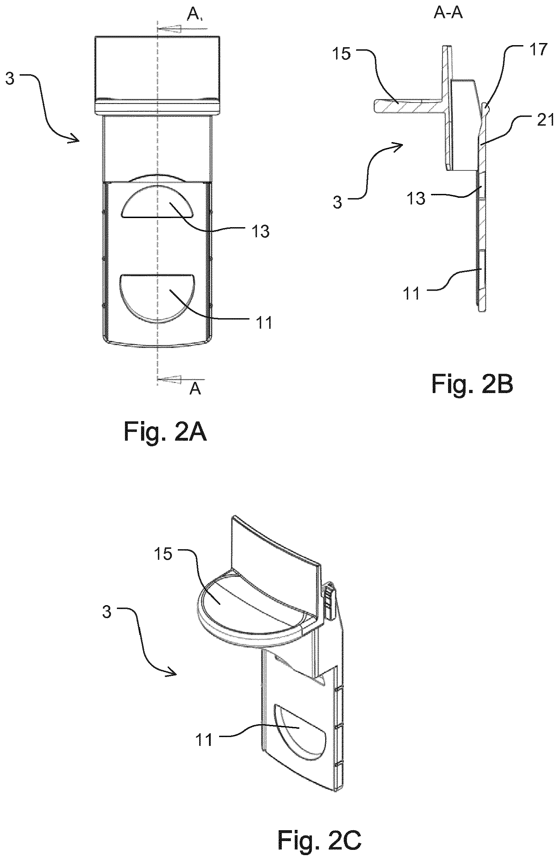

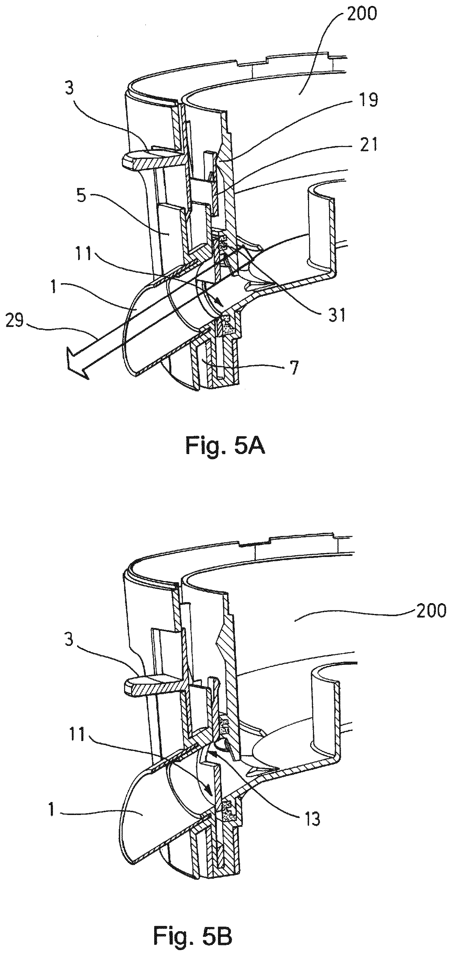

Fig. 2A zeigt den erfindungsgemäßen Schieber 3 in einer Vorderansicht mit einer ersten Querschnittsfläche 11. Die erste Querschnittsfläche 11 ist in diesem Ausführungsbeispiel als Kreissegment oder Kreisabschnitt als Teilfläche einer Kreisfläche ausgeführt, kann jedoch in anderen Ausführungsformen beliebige andere Formen aufweisen. Wenn der Schieber 3 im bestimmungsgemäßen Gebrauch in einer ersten Position die erste Querschnittsfläche 11 freigibt, kann eine Flüssigkeit (z. B. Saft eines Entsafters) durch die freigegebene erste Querschnittsfläche 11 des Auslaufs 1 hindurchfließen. Die erste und die zweite Position des Schiebers 3 werden in Fig. 5A und Fig. 5B näher erläutert. Als Überlauf-Querschnittsfläche 13 wird in diesem Ausführungsbeispiel diejenige Fläche bezeichnet, die in der zweiten Position des Schiebers 3 im bestimmungsgemäßen Einbauzustand (siehe Fig. 5B) noch offen bleibt, um einen zu hohen Füllstand im Sammelbehälter 200 zu vermeiden.

Fig. 2B zeigt den erfindungsgemäßen Schieber 3 in einer Schnittdarstellung A-A des in Fig. 2A in der Vorderansicht gezeigten Schiebers 3. Mittels eines Handgriffs 15 kann der Schieber 3 manuell von der ersten in die zweite Position und umgekehrt verschoben werden.

Weiterhin weist der Schieber 3 auf der Rückseite (in Fig. 2B auf der rechten Seite) einen Haken 17 auf, mit deren Hilfe der Schieber 3 in der ersten Position in eine Rasteinrichtung 19 (siehe Fig. 5A) eingehakt werden kann. Vorzugsweise wird der Steg 21 als elastisch verformbarer Steg aus Kunststoff ausgeführt, um den Haken 17 in die Rasteinrichtung 19 einzuhaken oder zu fixieren. Wird der Schieber 3 anschließend in die zweite Position (nach unten) verschoben, kann der Haken 17 wieder leicht durch manuelles Bewegen des Schiebers 3 gelöst werden. Fig. 2C zeigt den erfindungsgemäßen Schieber 3 in einer perspektivischen Darstellung.

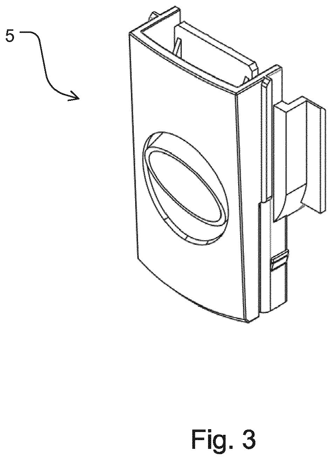

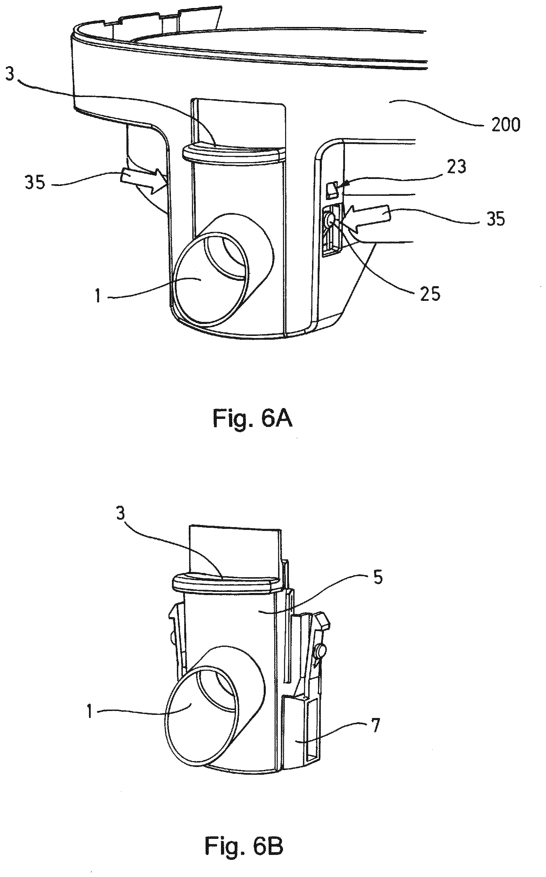

Fig. 3 zeigt die erfindungsgemäße Halterung 5 in einer perspektivischen Darstellung. Auf der Vorderseite der Halterung 5 ist eine kreisrunde Öffnung zu sehen, in die der Auslauf 1, lösbar oder nicht lösbar, eingefügt wird. Der Schieber 3 wird von oben in die Öffnung der Halterung 5 eingeschoben. Die Halterung 5 im Einbauzustand wird in den Fig. 5A, 5B und Fig. 6 gezeigt und näher erläutert.

Fig. 4 zeigt den erfindungsgemäßen Schnappverschluss 7 in einer perspektivischen Darstellung. Der Schnappverschluss 7 ist dazu vorgesehen, die Halterung 5 und den Schieber 3, also die erfindungsgemäße Nachlaufsperrvorrichtung, auf eine einfache Art und Weise mit dem Sammelbehälter 200 einerseits zu verbinden und andererseits, beispielsweise zur Reinigung der Einzelteile, wieder zu lösen. Zu diesem Zweck weist der Schnappverschluss 7 einen Einrastkeil 23 auf, mit dem die erfindungsgemäße Nachlaufsperrvorrichtung in den Sammelbehälter 200 eingehakt werden kann. Dies ist in Fig. 6 im Detail dargestellt. Zum Lösen der erfindungsgemäßen Nachlaufsperrvorrichtung ist ein Druckknopf 25 vorgesehen. Dieser Druckknopf 25 kann im fixierten Einbauzustand (siehe Fig. 6) gedrückt werden, und somit der Einrastkeil 23 aus der Verankerung im Sammelbehälter 200 gelöst werden. Somit ist vorteilhaft ein einfaches Montieren und Demontieren der erfindungsgemäßen Nachlaufsperrvorrichtung möglich. Sowohl der Einrastkeil 23 als auch der Druckknopf 25 ist zur vereinfachten Handhabung auf beiden Seiten eines elastischen und deformierbaren Stegs 27, der insbesondere aus Kunststoff hergestellt ist, des Schnappverschlusses 7 angeordnet.

Fig. 5A zeigt die erfindungsgemäße Nachlaufsperrvorrichtung mit dem Schieber 3 in der ersten Position (oben) in einer perspektivischen Halbschnitt-Darstellung. In dieser ersten Position wird die erste Querschnittsfläche 11 des Auslaufs 1, die eine untere Querschnittsfläche ist, durch den Schieber 3 freigegeben. Infolgedessen kann beispielsweise Saft, der sich in dem Sammelbehälter 200 befindet, durch die erste Querschnittsfläche 11 des Auslaufs 1 hindurchtreten und in einen Behälter, der unmittelbar unterhalb des Auslauf 1 angeordnet werden kann, aufgefangen oder gesammelt werden. Dieses Hindurchtreten aus dem Sammelbehälter 200 durch den Auslauf 1 wird mittels des Pfeils 29, der die Durchströmungsrichtung zeigt, dargestellt.

Weiterhin ist in Fig. 5A der Schnappverschluss 7 im Schnitt dargestellt, sowie der Steg 21 des Schiebers 3, der die erfindungsgemäße Nachlaufsperrvorrichtung in der ersten Position mittels der Rasteinrichtung 19 in dieser Position fixiert. In Fig. 5A wird auch eine Dichtung 31 dargestellt, die sicherstellen soll, dass die Flüssigkeit aus dem Sammelbehälter 200 ausschließlich durch den Auslauf 1 nach außen fließt, und somit die anderen Bereiche der erfindungsgemäßen Nachlaufsperrvorrichtung abdichtet. Die Dichtung 31 ist in diesem Ausführungsbeispiel als ringförmige Lippendichtung ausgeführt.

Fig. 5B zeigt die erfindungsgemäße Nachlaufsperrvorrichtung mit dem Schieber 3 in der zweiten Position (unten) in einer perspektivischen Halbschnitt-Darstellung. In der zweiten Position verschließt der Schieber 3 die erste Querschnittsfläche 11, allerdings verschließt er den Auslauf 1 nicht vollständig. Ein Teil der Auslauf-Querschnittsfläche wird durch die Überlauf-Querschnittsfläche 13 offengehalten. Damit kann vorteilhaft ein übermäßiges oder zu hohes Steigen einer Flüssigkeit in dem Sammelbehälter 200 vermieden und somit ein mögliches Gefährden elektrischer Teile in dem Küchengerät verhindert werden.

Fig. 6A zeigt die erfindungsgemäße Nachlaufsperrvorrichtung in dem Sammelbehälter 200 in einer perspektivischen Darstellung. Die erfindungsgemäße Nachlaufsperrvorrichtung ist vollständig für den vorgesehenen Gebrauch in den Sammelbehälter 200 eingefügt, einschließlich der Halterung 5 und dem Schnappverschluss 7. Der Schieber 3 ist in der zweiten Position (unten) angeordnet, und verschließt somit die zweite Querschnittsfläche 33 des Auslaufs 1.

Die beiden Pfeile 35 zeigen, wie die erfindungsgemäße Nachlaufsperrvorrichtung mittels manueller Druckausübung in Pfeilrichtung auf die beiden Druckknöpfe 25 (in Fig. 6A ist nur der rechte Druckknopf 35 dargestellt, der linke Druckknopf 35 ist verdeckt) vorteilhaft einfach von dem Sammelbehälter 200 gelöst und entnommen werden kann. Indem die beiden Druckknöpfe 35 nach innen gedrückt werden, werden gleichzeitig die beiden Einrastkeile 23 (in Fig. 6A ist nur der rechte Einrastkeil 23 dargestellt, der linke Einrastkeil 23 ist verdeckt) nach innen gedrückt und somit von dem Sammelbehälter 200 entkoppelt. Anschließend kann die erfindungsgemäße Nachlaufsperrvorrichtung nach unten entnommen werden.

Fig. 6B schließlich zeigt die aus dem Sammelbehälter 200 entnommene erfindungsgemäße Nachlaufsperrvorrichtung in einer perspektivischen Darstellung. Nach der Entnahme kann die erfindungsgemäße Nachlaufsperrvorrichtung auf einfache Art und Weise vorteilhaft weiter in die Einzelteile zerlegt und gereinigt werden.

Die vorliegende Erfindung ermöglicht mit einfachen konstruktiven und kostengünstigen Mitteln die Bereitstellung einer Nachlaufsperrvorrichtung für ein Küchengerät, um ein verbessertes Abfüllen oder Auslaufen von Inhalten, insbesondere von Flüssigkeiten wie beispielsweise Säften aus einem Entsafter, zu ermöglichen.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein. Die Bezugszeichen in sämtlichen Ansprüchen haben keine einschränkende Wirkung, sondern sollen lediglich deren Lesbarkeit verbessern.

### Bezugszeichenliste

- 100: Nachlaufsperrvorrichtung
- 200: Sammelbehälter

- 1: Auslauf
- 3: Schieber
- 5: Halterung
- 7: Schnappverschluss
- 9: Innenraum, torusförmig
- 11: erste Querschnittsfläche
- 13: Überlauf-Querschnittsfläche
- 15: Handgriff des Schiebers
- 17: Haken
- 19: Rasteinrichtung
- 21: Steg (Schieber)
- 23: Einrastkeil
- 25: Druckknopf
- 27: Steg (Schnappverschluss)
- 29: Pfeil der Durchströmung in der ersten Position des Schiebers
- 31: Dichtung
- 33: zweite Querschnittsfläche
- 35: Pfeile zur Betätigung der Druckknöpfe

## Patentansprüche

1. Nachlaufsperrvorrichtung (100) für ein Küchengerät, wobei das Küchengerät einen Sammelbehälter (200) und einen Auslauf (1) aufweist, wobei die Nachlaufsperrvorrichtung (100) zwischen dem Sammelbehälter (200) und dem Auslauf (1) angeordnet ist, und die Nachlaufsperrvorrichtung (100) einen zwischen einer ersten und einer zweiten Position bewegbaren Schieber (3) aufweist, wobei der Schieber (3) in der ersten Position eine erste Querschnittsfläche (11) des Auslaufs (1) freigibt, der Schieber (3) in der zweiten Position eine zweite Querschnittsfläche den Auslaufs (1) verschließt, und die erste Querschnittsfläche (11) und die zweite Querschnittsfläche sich zumindest in einem unteren Querschnittsbereich des Auslaufs (1) überdecken, **dadurch gekennzeichnet, dass** die Nachlaufsperrvorrichtung (100) eine Halterung (5) für den Schieber (3) aufweist, wobei die Halterung (5) mit dem Sammelbehälter (200) lösbar verbunden ist.

2. Nachlaufsperrvorrichtung (100) nach Anspruch 1, **dadurch gekennzeichnet, dass** die Halterung (5) einen Schnappverschluss (7) zum lösbaren Verbinden der Halterung (5) mit dem Sammelbehälter (200) aufweist.

3. Nachlaufsperrvorrichtung (100) nach einem der vorherigen Ansprüche, **dadurch gekennzeichnet, dass** der Sammelbehälter (200) eine Rasteinrichtung (19) zum lösbaren Fixieren des Schiebers (3) in der ersten Position aufweist.

4. Nachlaufsperrvorrichtung (100) nach einem der vorherigen Ansprüche, **dadurch gekennzeichnet, dass** der Schieber (3) eine translatorische Führung zum Bewegen von der ersten Position in die zweite Position und umgekehrt aufweist.

5. Nachlaufsperrvorrichtung (100) nach einem der vorherigen Ansprüche, **dadurch gekennzeichnet, dass** die zweite Querschnittsfläche den Auslauf (1) zwischen 50% und 90%, insbesondere zwischen 60% und 80%, der Auslauföffnung verschließt.

6. Nachlaufsperrvorrichtung (100) nach einem der vorherigen Ansprüche, **dadurch gekennzeichnet, dass** die erste Querschnittsfläche (11) den Auslauf (1) zwischen 50% und 90%, insbesondere zwischen 60% und 80%, der Auslauföffnung freigibt.

7. Nachlaufsperrvorrichtung (100) nach einem der vorherigen Ansprüche, **dadurch gekennzeichnet, dass** der Sammelbehälter (200) eine Dichtung (31) zum Abdichten des Schiebers (3) gegen den Sammelbehälter (200) aufweist.

8. Nachlaufsperrvorrichtung (100) nach einem der vorherigen Ansprüche, **dadurch gekennzeichnet, dass** der Schieber (3) und/oder die Halterung (5) und/oder der Schnappverschluss (7) ein Kunststoff, insbesondere ABS, aufweist, oder aus Kunststoff hergestellt ist.

9. Nachlaufsperrvorrichtung (100) nach einem der vorherigen Ansprüche, **dadurch gekennzeichnet, dass** der Auslauf (1) ein Metall aufweist, oder aus Metall hergestellt ist.

10. Nachlaufsperrvorrichtung (100) nach einem der vorherigen Ansprüche, **dadurch gekennzeichnet, dass** das Küchengerät ein Entsafter ist.

## Claims

1. Run-off blocking apparatus (100) for a food processor, wherein the food processor has a collection container (200) and an outlet (1), wherein the run-off blocking apparatus (100) is arranged between the collection container (200) and the outlet (1), and the run-off blocking apparatus (100) has a slider (3) which can be moved between a first and a second position, wherein the slider (3) in the first position releases a first cross-section surface (11) of the outlet (1), the slider (3) in the second position closes off a second cross-section surface of the outlet (1), and the first cross-section surface (11) and the second cross-section surface overlap at least in a lower cross-section region of the outlet (1), **characterised in that** the run-off blocking apparatus (100) has a retainer (5) for the slider (3), wherein the retainer (5) is connected to the collection container (200) in a releasable manner.

2. Run-off blocking apparatus (100) according to claim 1, **characterised in that** the retainer (5) has a snap -fit closure (7) for connecting the retainer (5) to the collection container (200) in a releasable manner.

3. Run-off blocking apparatus (100) according to one of the preceding claims, **characterised in that** the collection container (200) has a latching facility (19) for fixing the slider (3) in the first position in a releasable manner.

4. Run-off blocking apparatus (100) according to one of the preceding claims, **characterised in that** the slider (3) has a translatory guide for moving from the first position into the second position and vice versa.

5. Run-off blocking apparatus (100) according to one of the preceding claims, **characterised in that** the second cross-section surface closes off the outlet (1) between 50% and 90%, in particular between 60% and 80%, of the outlet opening.

6. Run-off blocking apparatus (100) according to one of the preceding claims, **characterised in that** the first cross-section surface (11) releases the outlet (1) between 50% and 90%, in particular between 60% and 80%, of the outlet opening.

7. Run-off blocking apparatus (100) according to one of the preceding claims, **characterised in that** the collection container (200) has a seal (31) for sealing off the slider (3) from the collection container (200).

8. Run-off blocking apparatus (100) according to one of the preceding claims, **characterised in that** the slider (3) and/or the retainer (5) and/or the snap-fit closure (7) comprises a plastic, in particular ABS, or is manufactured from plastic.

9. Run-off blocking apparatus (100) according to one of the preceding claims, **characterised in that** the outlet (1) comprises a metal, or is manufactured from metal.

10. Run-off blocking apparatus (100) according to one of the preceding claims, **characterised in that** the food processor is a juicer.

## Revendications

1. Dispositif de blocage d'écoulement final (100) pour un appareil culinaire, l'appareil culinaire comprenant un récipient collecteur (200) et une sortie (1), le dispositif de blocage d'écoulement final (100) étant disposé entre le récipient collecteur (200) et la sortie et le dispositif de blocage d'écoulement final (100) comprenant un curseur (3) mobile entre une première position et une seconde position, dans lequel le curseur (3) libère, dans la première position, une première surface de section (11) de la sortie (1), le curseur (3) ferme, dans la seconde position, une seconde surface de section de la sortie (1) et la première surface de section (11) et la seconde surface de section se recouvrent au moins dans une zone de section inférieure de la sortie (1), **caractérisé en ce que** le dispositif de blocage d'écoulement final (100) comprend un support (5) pour le curseur (3), dans lequel le support (5) est relié de façon amovible au récipient collecteur (200).

2. Dispositif de blocage d'écoulement final (100) selon la revendication 1 **caractérisé en ce que** le support (5) comprend une fermeture à déclic (7) pour une liaison amovible du support (5) au récipient collecteur (200).

3. Dispositif de blocage d'écoulement final (100) selon l'une des revendications précédentes, **caractérisé en ce que** le récipient collecteur (200) comprend un dispositif d'encliquetage (19) pour fixer de façon amovible le curseur (3) dans la première position.

4. Dispositif de blocage d'écoulement final (100) selon l'une des revendications précédentes, **caractérisé en ce que** le curseur (3) comprend un guide de translation pour le déplacer de la première position à la seconde position et inversement.

5. Dispositif de blocage d'écoulement final (100) selon l'une des revendications précédentes, **caractérisé en ce que** la seconde surface de section obture la sortie (1) dans une proportion de 50 % à 90 %, notamment de 60 % à 80 % de l'ouverture de sortie.

6. Dispositif de blocage d'écoulement final (100) selon l'une des revendications précédentes, **caractérisé en ce que** la première surface de section (11) obture la sortie (1) dans une proportion de 50 % à 90 %, notamment de 60 % à 80 % de l'ouverture de sortie.

7. Dispositif de blocage d'écoulement final (100) selon l'une des revendications précédentes, **caractérisé en ce que** le récipient collecteur (200) comprend un joint (31) pour rendre étanche le curseur (3) contre le récipient collecteur (200).

8. Dispositif de blocage d'écoulement final (100) selon l'une des revendications précédentes, **caractérisé en ce que** le curseur (3) et/ou le support (5) et/ou la fermeture à déclic (7) comprennent une matière plastique, notamment de l'ABS ou sont fabriqués en une matière plastique.

9. Dispositif de blocage d'écoulement final (100) selon l'une des revendications précédentes, **caractérisé en ce que** la sortie (1) comprend un métal ou est fabriquée en métal.

10. Dispositif de blocage d'écoulement final (100) selon l'une des revendications précédentes, **caractérisé en ce que** l'appareil culinaire est une centrifugeuse.
